# FASCICULE DE BREVET EUROPEEN

(11) **EP 0 934 909 B1**
(45) Date de publication et mention de la délivrance du brevet: **25.04.2001**
(21) Numéro de dépôt: 99400214.5
(22) Date de dépôt: 01.02.1999
(51) Int. Cl.: C03B 37/027

(54) **Procédé de fibrage en continu de préformes pour la fabrication de fibres optique**
Verfahren zum kontinuierlichen Ziehen von Vorformen für die Herstellung optischer Fasern
Process for continuous drawing of preforms for manufacturing optical fibres

(30) Priorité: 05.02.1998 FR 9801336
(43) Date de publication de la demande: 11.08.1999
(73) Titulaire: ALCATEL, 75008 Paris (FR)
(72) Inventeur: Mazabraud, Pascal, 93330 Neuilly sur Marne (FR); Alami Noureddine, Abderrahman, 95870 Bezons (FR)
(74) Mandataire: Buffière, Michelle

(56) Documents cités:
- DE-A- 2 932 196
- GB-A- 2 081 250
- PATENT ABSTRACTS OF JAPAN vol. 97, no. 12, 25 décembre 1997 & JP 09 202639 A (KOBE STEEL LTD.), 5 août 1997

## Description

L'invention se rapporte à un procédé de fibrage en continu de préformes pour la fabrication d'une fibre optique, dans lequel on déplace suivant un axe de fibrage une première préforme que l'on étire en fibre optique à travers un four de fibrage disposé dans l'axe de fibrage, et l'on déplace suivant l'axe de fibrage une deuxième préforme que l'on soude bout à bout avec la première préforme pour être étirée en fibre optique à la suite de la première préforme.

Un procédé de ce type est connu notamment de la demande de brevet US 4 407 667 publiée le 4 octobre 1983 sous revendication d'une demande FR 80 17005 déposée le 31 juillet 1980. Les préformes se présentent sous la forme de tiges de coeur destinées à être rechargées au cours de leur déplacement suivant l'axe de fibrage avant d'être étirées en fibre optique. La soudure bout à bout des deux tiges de coeur est réalisée dans une station de soudage qui est fixe par rapport à l'axe de fibrage et qui comprend un four ou une torche annulaire comme source de chaleur nécessaire à la soudure par fusion des deux bouts des préformes en contact l'une avec l'autre. Les deux tiges de coeur sont entraînées en déplacement suivant l'axe de fibrage par des rouleaux à une même vitesse de l'ordre de 8 millimètres par minute.

Le procédé décrit dans la demande précédente se révèle non dépourvu d'inconvénients.

D'une part, le déplacement des deux préformes à une certaine vitesse à travers la station de soudage fixe est responsable d'un échauffement des préformes en amont et en aval des deux bouts à souder. Cet excédent de chaleur se propage dans la direction axiale des préformes et contribue encore à étendre la zone affectée par la soudure. Lors de l'étirage des préformes, cette zone donne naissance à une fibre optique qui présente souvent des paramètres d'atténuation dégradés et doit être soustraite de la production du procédé de fibrage.

D'autre part, l'utilisation d'un four ou d'une torche annulaire en tant que source de chaleur pose un problème de pollution de la surface latérale des préformes lors de leur passage à travers la station de soudage.

Le but de l'invention est un procédé de fibrage qui pallie les inconvénients décrits précédemment.

L'idée à la base de l'invention est de souder les deux préformes en utilisant une source de chaleur non polluante et qui se déplace suivant l'axe de fibrage.

A cet effet, l'invention a pour objet un procédé de fibrage en continu de préformes pour la fabrication d'une fibre optique, dans lequel on déplace suivant un axe de fibrage une première préforme que l'on étire en fibre optique à travers un four de fibrage disposé dans l'axe de fibrage, et l'on déplace suivant l'axe de fibrage une deuxième préforme que l'on soude bout à bout avec la première préforme pour être étirée en fibre optique à la suite de la première préforme, caractérisé en ce que la soudure bout à bout des deux préformes est réalisée en déplaçant un laser de puissance suivant l'axe de fibrage et en asservissant son déplacement à celui des deux préformes pour maintenir un faisceau laser émis par le laser de puissance, à une même hauteur que les deux bouts à souder.

En déplaçant le laser de puissance suivant l'axe de fibrage et en asservissant son déplacement à celui des deux préformes pour maintenir un faisceau laser à une même hauteur que les deux bouts à souder, on réduit considérablement la zone affectée par la soudure.

Le faisceau laser est maintenu à la même hauteur que les deux bouts des préformes à souder de telle sorte que, en amont et en aval de la zone de soudure, la surface latérale des deux préformes n'est pas exposée au laser, et par conséquent n'est pas polluée.

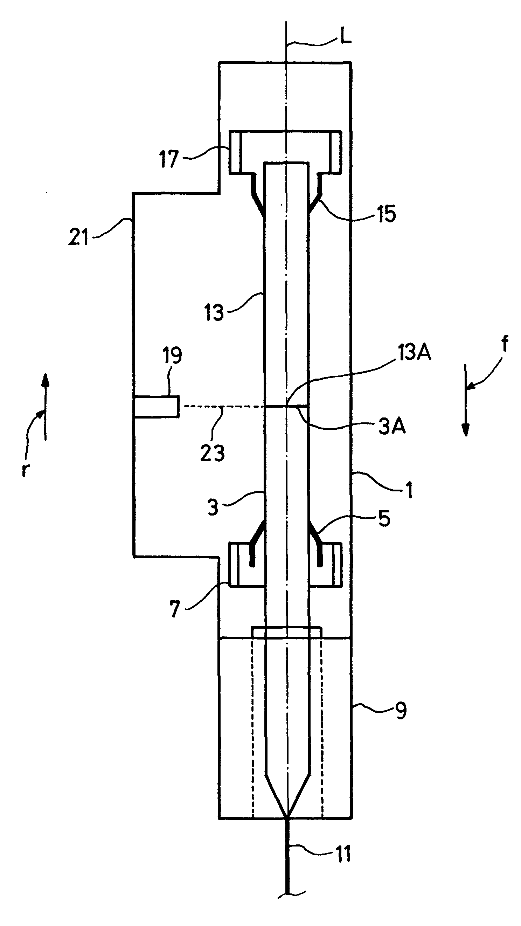

D'autres caractéristiques et avantages de l'invention apparaîtront à la lecture de la description d'un mode de réalisation de l'invention illustré par la figure unique qui montre de façon schématique une unité de fibrage permettant la mise en oeuvre d'un procédé selon l'invention.

Un procédé de fibrage en continu de préformes pour la fabrication d'une fibre optique est mis en oeuvre, figure unique, à l'aide d'une machine de descente préforme 1 pour déplacer en translation suivant un axe de fibrage L une première préforme 3 fixée dans un mandrin 5 solidaire d'un premier chariot 7 mobile suivant l'axe de fibrage. La première préforme 3 est descendue par le premier chariot 7 à travers un four de fibrage 9 disposé dans l'axe de fibrage L pour être chauffée et étirée en une fibre optique 11 reçue par une bobine réceptrice non représentée.

Une deuxième préforme 13 est déplacée en translation suivant l'axe de fibrage L à l'aide de la machine de descente préforme 1 en étant fixée par un mandrin 15 solidaire d'un deuxième chariot 17 mobile suivant l'axe de fibrage.

Le déplacement des deux chariots 7 et 17 dans le sens du fibrage indiqué par la flèche f sur la figure, s'effectue à une même vitesse de translation V. La mise en place de la deuxième préforme 13 dans la machine de descente préforme 1 et le serrage du mandrin 15 du deuxième chariot 17 sont réalisés de façon telle à ce que les deux préformes 3 et 13 soient d'abord séparées l'une de l'autre puis disposées bout à bout, les faces de contact étant soigneusement polies.

La deuxième préforme 13 est soudée bout à bout à la première préforme 3 et est déplacée en translation suivant l'axe de fibrage par le deuxième chariot 17 pour être chauffée dans le four de fibrage et étirée en fibre optique à la suite de la première préforme. A la fin du fibrage de la première préforme 3, le mandrin 5 du premier chariot 7 est ouvert pour permettre à celui-ci d'être décalé par rapport à l'axe de fibrage L et d'être déplacé par la machine de descente préforme 1 dans le sens opposé au fibrage indiqué par la flèche r sur la figure. Ce premier chariot est replacé dans l'axe de fibrage en occupant la position initiale du deuxième chariot 17 pour permettre la mise en place d'une troisième préforme disposée bout à bout avec la deuxième préforme et assurer ainsi un fibrage en continu des préformes.

Selon l'invention, la soudure bout à bout des deux préformes 3 et 13 est réalisée en déplaçant un laser de puissance 19 suivant l'axe de fibrage L et en asservissant son déplacement à celui des deux préformes pour maintenir un faisceau laser à une même hauteur que les deux bouts 3A et 13A à souder.

Sur la figure, un laser de puissance 19 est guidé en déplacement parallèlement à l'axe de fibrage L par une tige de guidage 21 solidaire de la machine de descente préforme 1. Le laser de puissance 19 est déplacé dans le sens de fibrage f à l'aide d'un mécanisme classique, et est asservi au déplacement des deux préformes le long de la machine de descente préforme 1 pour maintenir un faisceau laser 23 à une même hauteur que les deux bouts 3A et 13A des préformes à souder. L'asservissement du déplacement du laser de puissance 19 au déplacement des deux préformes permet de réduire la zone affectée par la soudure. L'énergie apportée par le laser est focalisée sur les deux bouts 3A et 13A des préformes à souder de telle sorte que la surface latérale des deux préformes, en amont et en aval de la zone de soudure, n'est pas exposée au faisceau et n'est donc pas polluée.

A la fin du fibrage de la première préforme 3, le laser de puissance 19 est éteint et déplacé par le mécanisme classique précédent dans le sens r opposé au fibrage, par exemple de façon simultanée avec le premier chariot 7, pour occuper une position initiale à une même hauteur que les deux bouts en contact de la deuxième préforme et de la troisième préforme installée dans la machine de descente préforme en remplacement de la première préforme.

Dans une première variante de réalisation de l'invention, trois lasers de puissances sont disposés dans un plan perpendiculaire à l'axe de fibrage en étant distribués autour de cet axe de fibrage à 120 degrés les uns des autres. Ils se déplacent ensemble parallèlement à l'axe de fibrage et leur déplacement est asservi à celui des deux préformes pour maintenir trois faisceaux laser à la même hauteur que les deux bouts en contact des deux préformes à souder.

Selon cette première variante de réalisation de l'invention, la fusion des deux bouts à souder est atteinte rapidement et d'une façon homogène dans le plan de soudure.

Dans une deuxième variante de réalisation de l'invention, le laser de puissance est déplacé en rotation alternative autour de l'axe de fibrage L en même temps qu'il est déplacé en translation parallèlement à cet axe de fibrage.

Un support plan est disposé perpendiculairement à l'axe de fibrage et est guidé en translation parallèlement à l'axe de fibrage par une tige de guidage, une ouverture centrale permettant le passage des préformes à travers ce support plan.

Le laser de puissance est monté mobile en rotation sur le support plan en décrivant un cercle autour de l'axe de fibrage, le faisceau laser étant dirigé sur les deux bouts des deux préformes à souder.

Le déplacement en translation du support plan est asservi au déplacement des deux préformes pour que le faisceau laser soit maintenu à une même hauteur que les deux bouts des préformes à souder.

Le déplacement en rotation du laser de puissance est choisi en fonction d'un nombre de tours alternatifs suffisants pour porter les deux bouts à fusion et souder les deux préformes pendant leur descente par la machine de descente préforme.

Selon cette deuxième variante de réalisation de l'invention, la chaleur nécessaire à la fusion des deux bouts en contact des deux préformes est apportée de façon continue à la périphérie des deux bouts ce qui permet une fusion rapide et homogène avec un seul laser de puissance.

## Revendications

1. Un procédé de fibrage en continu de préformes pour la fabrication d'une fibre optique, dans lequel on déplace suivant un axe de fibrage (L) une première préforme (3) que l'on étire en fibre optique (11) à travers un four de fibrage (9) disposé dans l'axe de fibrage, et l'on déplace suivant l'axe de fibrage une deuxième préforme (13) que l'on soude bout à bout avec la première préforme (3) pour être étirée en fibre optique (11) à la suite de la première préforme (3), caractérisé en ce que la soudure bout à bout des deux préformes est réalisée en déplaçant au moins un laser de puissance (19) suivant l'axe de fibrage (L) et en asservissant son déplacement à celui des deux préformes (3,13) pour maintenir un faisceau laser (23) émis par le laser de puissance, à une même hauteur que les deux bouts à souder (3A,13A).

2. Un procédé selon la revendication 1, dans lequel la soudure bout à bout des deux préformes est réalisée en déplaçant le laser de puissance simultanément en translation suivant l'axe de fibrage et en rotation autour de cet axe de fibrage.

3. Un procédé selon la revendication 1, dans lequel la soudure bout à bout des deux préformes est réalisée en déplaçant suivant l'axe de fibrage plusieurs lasers de puissance disposés dans un plan perpendiculaire à cet axe et distribués autour de cet axe, et en asservissant leur déplacement d'ensemble à celui des deux préformes pour maintenir un faisceau laser émis par chaque laser de puissance, à une même hauteur que les deux bouts à souder.

## Patentansprüche

1. Verfahren zum kontinuierlichen Ziehen von Vorformen für die Herstellung einer optischen Faser, bei dem entlang einer Ziehachse (L) eine erste Vorform (3) bewegt wird, die durch einen auf der Ziehachse angeordneten Ziehofen (9) hindurch zu einer optischen Faser (11) ausgezogen wird, und entlang der Ziehachse eine zweite Vorform (13) bewegt wird, die mit der ersten Vorform (3) stumpf verschweißt wird, um nach der ersten Vorform (3) zu einer optischen Faser (11) ausgezogen zu werden, dadurch gekennzeichnet, daß die stumpfe Verschweißung der zwei Vorformen unter Bewegung wenigstens eines Hochleistungslasers (19) entlang der Ziehachse (L) erfolgt, wobei dessen Bewegung auf die der zwei Vorformen (3, 13) abgestimmt wird, um einen von dem Hochleistungslaser abgegebenen Laserstrahl (23) auf einer gleichen Höhe wie die zwei zu verschweißenden Enden (3A, 13A) zu halten.

2. Verfahren nach Anspruch 1, bei dem die stumpfe Verschweißung der zwei Vorformen unter Bewegung des Hochleistungslasers gleichzeitig in Translation entlang der Ziehachse und in Rotation um diese Ziehachse erfolgt.

3. Verfahren nach Anspruch 1, bei dem die stumpfe Verschweißung der zwei Vorformen unter Bewegung von mehreren in einer zu der Ziehachse senkrechten Ebene angeordneten und um diese Achse verteilten Hochleistungslasern entlang der Ziehachse erfolgt, wobei deren gemeinsame Bewegung auf die der zwei Vorformen abgestimmt wird, um einen von jedem Hochleistungslaser abgegebenen Laserstrahl auf einer gleichen Höhe wie die zwei zu verschweißenden Enden zu halten.

## Claims

1. A method of drawing fiber continuously from preforms for manufacturing an optical fiber, in which method a first preform (3) is displaced along a fiber-drawing axis (L) and is drawn into an optical fiber (11) through a fiber-drawing furnace (9) disposed on the fiber-drawing axis, and a second preform (13) is displaced along the fiber-drawing axis, which second preform is butt welded to the first preform (3) so as to be drawn into an optical fiber (11) following on from the first preform (3), said method being characterized in that the two preforms are butt welded, i.e. they are welded together end-to-end, by displacing at least one power laser (19) along the fiber-drawing axis (L), and by servo-controlling the displacement of said laser to the displacement of the two preforms (3, 13) so as to maintain a laser beam (23) emitted by the power laser at the same height as the two ends to be welded together (3A, 13A).

2. A method according to claim 1, in which the two preforms are butt welded by displacing the power laser simultaneously in translation along the fiber-drawing axis and in rotation thereabout.

3. A method according to claim 1, in which the two preforms are butt welded by displacing a plurality of power lasers along the fiber-drawing axis, which lasers are disposed in a plane perpendicular thereto and are distributed thereabout, and by servo-controlling the overall displacement of the lasers to the displacement of the preforms so as to maintain a laser beam emitted by each power laser at the same height as the two ends to be welded together.
